# EUROPEAN PATENT SPECIFICATION

(11) **EP 4 415 315 B1**
(45) Date of publication and mention of the grant of the patent: **28.01.2026**
(21) Application number: 23215049.0
(22) Date of filing: 07.12.2023
(51) Int. Cl.: H04L 9/40, G06F 21/55

(54) **SYSTEMS AND METHODS FOR EXTRACTING AND PROCESSING AUDITABLE METADATA**
SYSTEME UND VERFAHREN ZUR EXTRAKTION UND VERARBEITUNG AUDITIERBARER METADATEN
SYSTÈMES ET PROCÉDÉS D'EXTRACTION ET DE TRAITEMENT DE MÉTADONNÉES VÉRIFIABLES

(30) Priority: 13.02.2023 US 202363484623 P; 31.05.2023 US 202318326194
(43) Date of publication of application: 14.08.2024
(73) Proprietor: Cisco Technology, Inc., San Jose, CA 95134-1706 (US)
(72) Inventor: NAPPER, Jeffrey, 2628BG Delft (NL); MUYAL, Herve, 1196 GLAND VD (CH); DIACONU, Jean, 74240 Gaillard (FR); YANNUZZI, Marcelo, 1485 Nuvilly Canton de Fribourg (CH); BOSCH, Hendrikus G. P., 1432MN Aalsmeer (NL)
(74) Representative: Warren, Caroline Elisabeth

(56) References cited:
- US-A1- 2020 120 120
- US-A1- 2023 008 901

## Description

### TECHNICAL FIELD

The present disclosure relates generally to data security monitoring, and more particularly, to extracting and processing auditable metadata.

### BACKGROUND

Having visibility and the capacity to audit metadata extracted and sent to third party systems is a concern for data controllers and/or data processors. Prior techniques include proxy and/or reverse proxy termination systems acting as Man-in-the-Middle Attack (MitM), delegation of credentials, and/or the use of sidecars. However, many of these options are usually unfeasible in practice since solutions deployed in pod(s) operate as black boxes while encrypting and/or sending the information extracted to the third party systems. Further, techniques such as sidecars are not largely accepted or presently used.
US2023008901A1 describes techniques for securing containerized applications are disclosed. In some embodiments, a system, process, and/or computer program product for securing containerized applications includes detecting a new application container (e.g., an application pod); deploying a security entity (e.g., a firewall) to the application container; and monitoring all traffic to and from the application container (e.g., all layer-7 ingress, egress, and east-west traffic associated with the application container) using the security entity to enforce a policy.
US2020120120A1 describes a system and method for providing network security for serverless functions. The method includes inspecting network traffic between a pod and at least one network, wherein the pod is an instance of a software container configured to execute at least one serverless function, wherein each serverless function accesses at least one service via the at least one network; detecting a violation of a network profile created for each of the at least one serverless function based on the inspected second traffic, wherein each network profile defines a whitelist of normal network behavior of the respective serverless function with respect to the at least one service, wherein the normal behavior includes a plurality of properties of normal inputs and normal outputs for the serverless function, wherein the detected violation is a deviation from the whitelist of normal network behavior; and performing at least one mitigation action when the violation is detected.

### BRIEF DESCRIPTION OF THE DRAWINGS

FIG. 1 illustrates an example system for extracting metadata, in accordance with certain embodiments.
FIG. 2 illustrates an example system for extracting and processing auditable metadata, in accordance with certain embodiments.
FIG. 3 illustrates an example system for extracting and processing auditable metadata, in accordance with certain embodiments.
FIG. 4 illustrates an example method for storing auditable metadata, in accordance with certain examples.
FIG. 5 illustrates an example computer system, in accordance with certain embodiments.

### DESCRIPTION OF EXAMPLE EMBODIMENTS

### OVERVIEW

Aspects of the invention are set out in the independent claims and preferred features are set out in the dependent claims. Features of one aspect may be applied to each aspect alone or in combination with other features.

Technical advantages of certain embodiments of this disclosure may include one or more of the following. Certain systems and methods described herein may increase data security and protect from unauthorized extraction of sensitive data rather than the authorized extraction of the corresponding metadata. Certain embodiments may provide increased visibility and transparency of network traffic between deployed pods and a third party entity doing the data classification and inventory.

Other technical advantages will be readily apparent to one skilled in the art from the following figures, descriptions, and claims. Moreover, while specific advantages have been enumerated above, various embodiments may include all, some, or none of the enumerated advantages.

### EXAMPLE EMBODIMENTS

In general, existing techniques usually claim to extract only metadata, such that the actual, sensitive data remains in the original infrastructure (i.e., a cloud infrastructure) under the control of a corresponding data controller or processor. However, current data extraction techniques are not auditable in real-time. They operate as black boxes without allowing a data controller or processor to observe and audit the data/metadata that is being processed/extracted. Many current solutions require sending the metadata to the solution provider's backend for classification and inventory. Some current solutions copy the data locally (e.g., for inspection, for exercising data subject rights (DSRs), etc.). These issues are concerns for companies in highly regulated industries (e.g., oil and gas, etc.) as well as in the public sector and government agencies. Certain embodiments described herein may transparently capture, store, and/or analyze metadata obtained from the cloud infrastructure, the application infrastructure, the application logic, and/or the data layer.

The embodiments described herein provide for extracting and processing auditable metadata in a transparent manner. The present disclosure contemplates deploying pods in a user space of a node endowed with a listener. Information may be extracted from application services and may be captured and processed by elements within the pods. The metadata extracted from the application services may be catalogued and sent to various systems for storing/presenting the metadata in an auditable manner. The present disclosure further contemplates configuring the filtering capabilities of the listener.

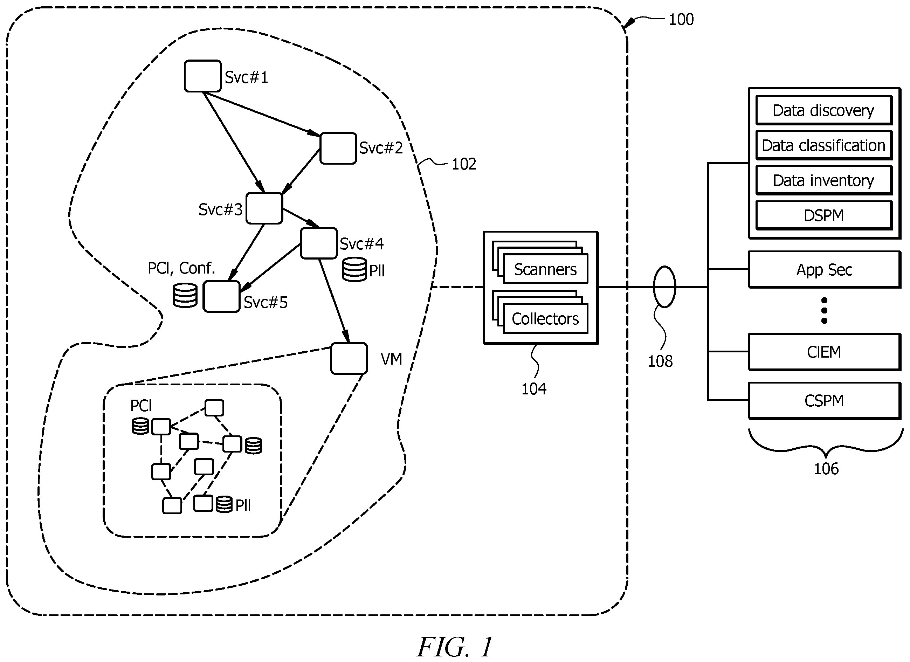

FIG. 1 illustrates an example system 100 for extracting metadata. System 100 may include a set of application services and/or a virtual machine (VM) each including sensitive data (collectively located in a cloud infrastructure 102), scanners and/or collectors 104, and any combination thereof. In embodiments, a third party entity may deploy the scanners and/or collectors 104 to extract signals/data from the cloud infrastructure 102 to analyze the metadata. The scanners and/or collectors 104 may transmit the extracted signals/data to software as a service (SaaS) 106 components. Without limitations, SaaS 106 components may include a data engine having a data discovery module, a data classification module, a data inventory module, and a data security posture management (DSPM) module, an application security module, a cloud infrastructure entitlement management (CIEM) module, and/or a cloud security posture management (CSPM) module.

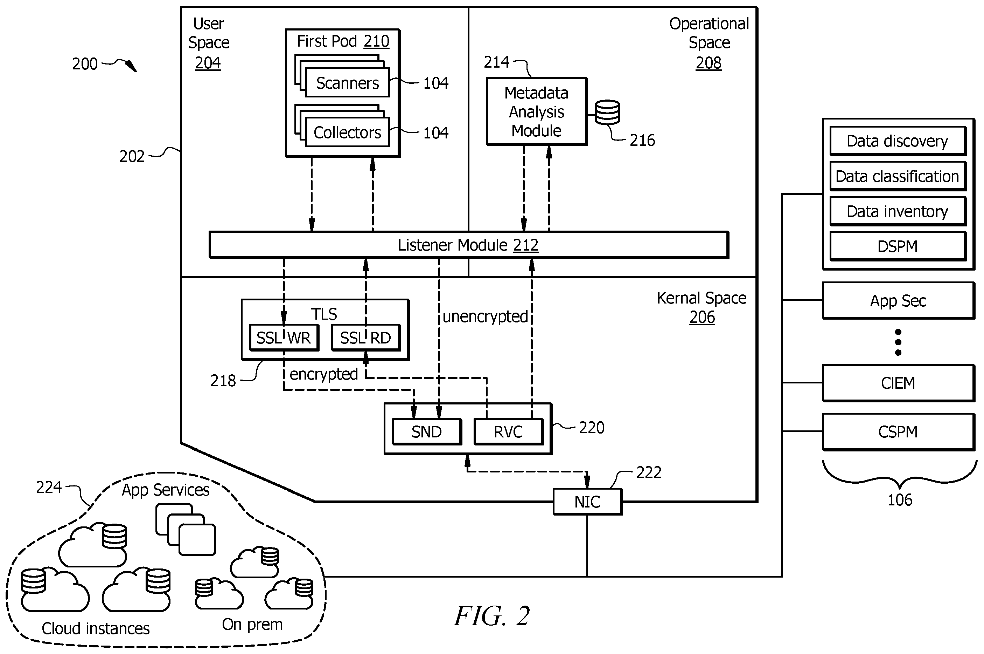

The application services, including services 1 through 5, and the virtual machine may include sensitive data. In embodiments, the sensitive data may include personally identifiable information (PII) and payment card industry (PCI) data. In certain embodiments, the set of application services and sensitive data may be subject to the owner's control (e.g., a data controller or a data processor). In some embodiments, the scanners and collectors 104 may be deployed and/or maintained in infrastructure under the owner's control. Further, the SaaS 106 components may be deployed on-premises and the like. With respect to the illustrated area 108, the acting owner of cloud infrastructure 102 may not be capable of verifying whether the extraction techniques are operating solely on the metadata or on both the metadata and corresponding sensitive data. The area 108 may be representative of the "black-box" operations of existing techniques preventing data controllers or processors from auditing data extraction in real-time. The present disclosure contemplates an improved system utilizing a listener module (such as listener module 212 in FIG. 2) configured to monitor network traffic between scanners and collectors 104 and SaaS 106 components and to provide means for verifying data extraction techniques through audit.

Although FIG. 1 describes and illustrates particular components, devices, or systems carrying out particular actions, this disclosure contemplates any suitable combination of any suitable components, devices, or systems carrying out any suitable actions.

FIG. 2 illustrates an example system 200 for extracting and processing auditable metadata, in accordance with certain embodiments. System 200 may include a node 202 comprising a user space 204, a kernel space 206, and an operational space 208. A first pod 210 comprising one or more scanners and collectors 104 may be deployed in the user space 204. The first pod 210 may be configured to collect signals from different applications and data instances in the cloud and/or on-premise. In embodiments, a listener module 212 may be at least partially deployed within the user space 204 as well. The listener module 212 may be communicatively coupled to the first pod 210 and configured to monitor the network traffic to and from the first pod 210. The listener module 212 may further be communicatively coupled to a metadata analysis module 214 deployed in the operational space 208 of the node 202. In embodiments, the metadata analysis module 214 may be configured to operate the listener module 212 and to receive metadata for storage in a local database 216. The local database 216 may be configured to store the metadata in an auditable manner, such as an auditable record.

As illustrated, the first pod 210 may communicate through the kernel space 206. The kernel space 206 may include a transport layer security (TLS) library 218 using OpenSSL read and write functions, kernel-based send and receive modules 220 to handle unencrypted communications, and a network interface controller (NIC) 222. Communications may be received by and sent out via the NIC 222. In embodiments, application services 224 and SaaS 106 components may be communicatively coupled to the node 202 through the NIC 222. Both the application services 224 of system 200 and the SaaS 106 components may include cloud instance services, on-premises services, and/or the like.

To collect information from the cloud infrastructure, the application infrastructure, the application logic layer, and the application data layer, existing solutions may have typically deployed as pod(s) (such as first pod 210). Each pod may include various scanners/collectors 104. Scanners/collectors 104 may collect signals from different applications and data instances in the cloud and/or on-premise. For example, scanners/collectors 104 may collect signals from a set of application services 224 and/or sensitive data under the owner's control (e.g., a data controller or a data processor). The signals collected may be processed and sent (e.g., as metadata) to a set of tools and systems that may be embodied as SaaS 106 components or solutions in a third-party cloud or deployed on-premises within the same infrastructure.

In embodiments, the data engine, application security module, CIEM module, and CSPM module may receive metadata extracted from application services 224. The data engine of system 200 may be responsible for driving and/or commanding data discovery, data classification, and/or cataloging. In certain embodiments, the data engine may provide functions such as a DSPM module, means to exercise DSRs, data controls, etc. The application security module may include any suitable security tool (e.g., Panoptica). In certain embodiments, the CIEM module and/or CSPM module may be integrated with the application security module. In certain embodiments, other systems may receive metadata extracted from application services 224.

In one or more embodiments, the system 200 may perform a method of data extraction for the application services 224. Further, auditable metadata may be subsequently stored for verification in view of this method. At a first step, the first pod 210 may be deployed in user space 204 of the node 202 endowed with a listener module 212. Listener module 212 may function as a logical span port in the user space 204. For example, the listener module 212 may operate as a transparent element for scanners and collectors 104, requiring changes neither to their implementation nor to their communication interfaces. This may be implemented using uProbes, where uProbes may trace calls and capture the data before and after they hit the TLS library 218 (e.g., before they are encrypted or after being decrypted by OpenSSL) or before they are sent to (or received from) kernel-based send and receive modules 220 using NIC 222.

At a second step, the information extracted from application services 224 may be captured and processed by elements within first pod 210. At a third step, the data may be forwarded to the data engine, application security module, CIEM module, or CSPM module of the SaaS 106 components. In certain embodiments, bidirectional communications between the first pod 210 and the elements in application services 224, as well as between first pod 210 and SaaS 106 components may be captured by the listener module 212 as auditable metadata. In one embodiment, the information within the auditable metadata may be encrypted (e.g., using Bring Your Own Key (BYOK)).

In certain embodiments, metadata analysis module 214 may process and correlate the metadata extracted from application services 224 and sent to SaaS 106 components. The metadata analysis module 214 may be further configured to store/present the metadata in an auditable manner in the local database 216. The listener module 212 may be configurable, by the metadata analysis module 214, to include features such as a configurable sampling mode (including persisting all metadata extracted and sent for audit trails), a configurable sampling rate, a configurable start/stop function (enabling real-time analysis), etc. In certain embodiments, the listener module 212 may be configured by a separate component controlled by the metadata analysis module 214, such as a listener configurator module. The listener module 212 may further support filtering capabilities, which may be configured using the metadata analysis module 214 and implemented at a data plane level using filters. Filtering techniques may include configurable filters for a specific scanner/collector (e.g., mongoDB, MariaDB, etc.) or for a specific pod (e.g., an on-premise instance).

In certain embodiments, the metadata analysis module 214 may provide ways to detect deltas (e.g., variations) between incoming and outgoing network traffic in reference to the first pod 210 (e.g., data exfiltration, enriched metadata), leverage other techniques such as attack vector/path analysis to the first pod 210 (e.g., code might have been poisoned in day -1), quarantine or block communications to/from compromised pod(s) that are exposing more information than was originally claimed by solution provider, and the like. For example, the metadata analysis module 214 may be configured to receive incoming signals communicated from at least one of the application services 224 to the first pod 210 via the listener module 212. The metadata analysis module 214 may be further configured to extract the metadata associated with data provided by the received incoming signals and to receive outgoing signals communicated from the first pod 210 to an external entity (such as the SaaS 106 components). Once having received both the incoming and outgoing signals, the metadata analysis module 214 may be configured to determine that both the metadata and the data associated with the metadata have been transmitted to said external entity based on a comparison between the incoming signals and the outgoing signals. This comparison may compare and detect any deltas or variations between the inflowing and outflowing network traffic. As defined herein, a delta may be equivalent to variation between signals.

Although this disclosure describes and illustrates particular steps as occurring in a particular order, this disclosure contemplates any suitable steps of occurring in any suitable order. Although this disclosure describes and illustrates particular steps, this disclosure contemplates any suitable steps, which may include all, some, or none of the steps of FIG. 2, where appropriate.

Although FIG. 2 illustrates a particular number of components of system 200, this disclosure contemplates any suitable number of components. Although FIG. 2 illustrates a particular arrangement of the components of system 200, this disclosure contemplates any suitable arrangement of the components. Furthermore, although FIG. 2 describes and illustrates particular components, devices, or systems carrying out particular actions, this disclosure contemplates any suitable combination of any suitable components, devices, or systems carrying out any suitable actions.

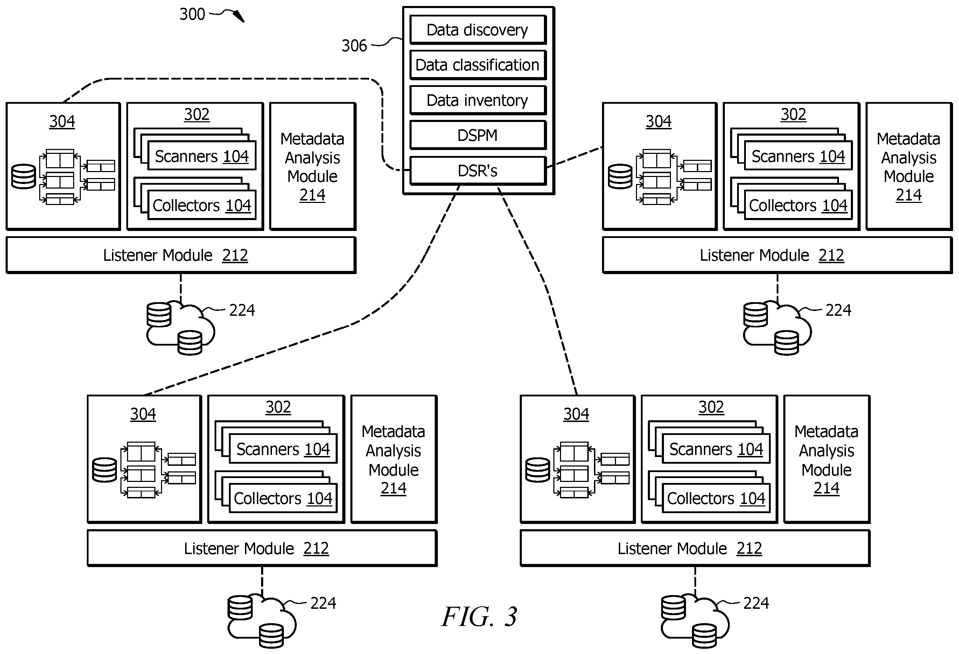

FIG. 3 illustrates an example system 300 for extracting and processing auditable metadata, in accordance with certain embodiments. System 300 includes pods 302 comprising scanners and collectors 104, pods 304, application services 224, a data engine 306 (comprising a data discovery module, data classification module, data inventory module, DSPM module, and DSRs), and listener modules 212 with corresponding metadata analysis modules 214. In certain embodiments, data engine 306 may find and locate all entries for a particular subject (e.g., John Doe), for a given social security number, and the like. For example, pods 304 may store local copies of the data, in some cases reindexed and/or hashed and consistently anonymized. The data engine 306 may be configured to identify one or more instances of a searched query (such as a name, credit card number, social security number, etc.) in one or more pods 304, where the searched query is anonymized during post-classification by an external entity. Once located, the data engine 306 may provide instructions to delete the identified one or more instances of the searched query from the pods 304.

System 300 may be used to gain visibility and insights into non-transparent DSR practices, including the creation of additional copies of the data. In some embodiments, system 300 may have the capacity to restrict and/or block access to additional copies of the data. In certain embodiments, system 300 may make those copies auditable.

Although FIG. 3 illustrates a particular number of components of system 300, this disclosure contemplates any suitable number of components. Although FIG. 3 illustrates a particular arrangement of the components of system 300, this disclosure contemplates any suitable arrangement of the components. Furthermore, although FIG. 3 describes and illustrates particular components, devices, or systems carrying out particular actions, this disclosure contemplates any suitable combination of any suitable components, devices, or systems carrying out any suitable actions.

Technical advantages of certain embodiments of this disclosure may include one or more of the following. This disclosure describes systems and methods that transparently capture, store, and/or analyze metadata obtained from the cloud infrastructure, the application infrastructure, the application logic, and/or the data layer. Certain embodiments described herein have the capacity to scrutinize and audit which metadata is sent to by third-party tools and systems. In some embodiments, deltas (e.g., variations) are detected within auditable metadata (e.g., using data exfiltration, enriched metadata, etc.). In some embodiments, attack vector/path analysis during metadata extraction is leveraged (e.g., code might have been poisoned in day -1). In certain embodiments, communications are quarantined/blocked to/from compromised tools and systems that may expose more information than was originally claimed by solution provider.

Other technical advantages will be readily apparent to one skilled in the art from the following figures, descriptions, and claims. Moreover, while specific advantages have been enumerated above, various embodiments may include all, some, or none of the enumerated advantages.

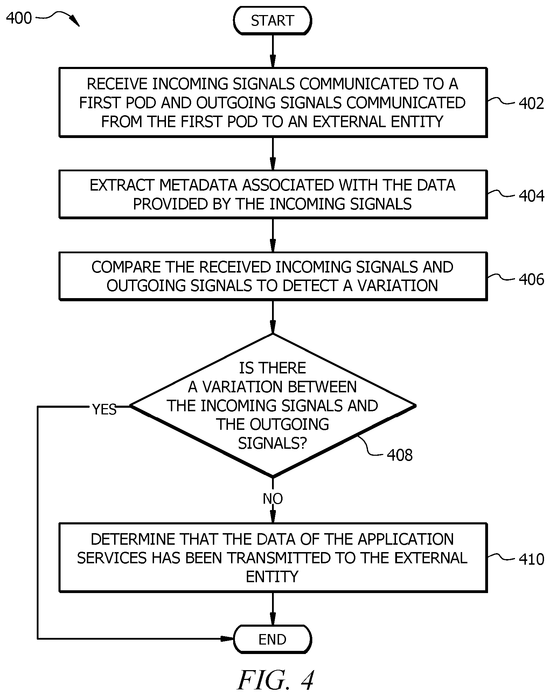

FIG. 4 illustrates an example method 400 to store metadata in an auditable manner in the local database 216 (referring to FIG. 2). The method 400 may begin at step 402, where the listener module 212 (referring to FIG. 2) may receive the incoming signals communicated from the application services 224 (referring to FIG. 2) to the first pod 210 (referring to FIG. 2) and receive the outgoing signals communicated from the first pod 210 to an external entity, such as the SaaS 106 components (referring to FIG. 2). In embodiments, a data controller or processor may have requested an external third party to categorize and inventory sensitive data from the application services 224. Depending on the mutual understanding between parties, the metadata corresponding to said data may be solely authorized for processing instead of the actual data. The listener module 212 may be configured to monitor network traffic to and from the first pod 210 deployed in the user space 204 (referring to FIG. 2) to verify that the actual, sensitive data is not transmitted to and/or stored by the external entity.

At step 404, the listener module 212 may extract the metadata provided by the received incoming signals. For example, the listener module 212 may be communicatively coupled to the metadata analysis module 214 (referring to FIG. 2), and the metadata analysis module 214 may receive the incoming signals intercepted by the listener module 212. The metadata analysis module 214 may process the incoming signals and extract the metadata contained therein. The metadata analysis module 214 may then instruct the local database 216 (referring to FIG. 2) to store the extracted metadata in an auditable manner.

At step 406, the metadata analysis module 214 may compare the received incoming signals and outgoing signals to detect a variation, or a delta, between the two. Step 406 may provide for analyzing payloads of the incoming and outgoing signals, thereby inherently determining a variation or a delta between the two. At step 408, the metadata analysis module 214 may determine whether there is a variation between the incoming signals and the outgoing signals. If one occurs, exfiltration of the sensitive data may be flagged and/or stopped in later steps. For example, the incoming signals may correspond to or contain the sensitive data of the application services. The incoming signals may require processing to extract the metadata to be sent to the external third party (i.e., the SaaS 106 components). If the outgoing signals are the same as the incoming signals, there has been no processing, or the processed data from the incoming signals is not being sent out as the outgoing signals. The present disclosure is not limited to such embodiments and may include embodiments wherein the first pod 210 may process the incoming signals, certain parsing of the incoming signals may occur, and/or there may be some other delta between the incoming and outgoing signals. In such an embodiment, the outgoing and incoming signals may be the same, and a determination may be made that the outgoing signals comprise the sensitive data of the application services. If there is a determination that there is no variation between the incoming and outgoing signals, the method 400 proceeds to step 410. Otherwise, the method 400 may proceed to end. If there is a variation between the incoming and outgoing signals, the data processor or controller may be verified that the incoming signals had been processed to extract the associated metadata to be sent out as the outgoing signals.

At step 410, the metadata analysis module 214 may determine that the sensitive data of the application services 224 has been or is being transmitted from the first pod 210 to the external entity. The system 200 (referring to FIG. 2) may conduct further operations to prevent transmission to the SaaS 106 components For example, the system 200 may terminate all operations, communicably de-couple from the SaaS 106 components, transmit an alert, flag, filter, block, and the like. In one or more embodiments, the method 400 proceeds to end.

Particular embodiments may repeat one or more steps of the method of FIG. 4, where appropriate. Although this disclosure describes and illustrates particular steps of the method of FIG. 4 as occurring in a particular order, this disclosure contemplates any suitable steps of the method of FIG. 4 occurring in any suitable order. Moreover, although this disclosure describes and illustrates an example method to auth to store metadata in an auditable manner, including the particular steps of the method of FIG. 4, this disclosure contemplates any suitable method including any suitable steps, which may include all, some, or none of the steps of the method of FIG. 4, where appropriate. Furthermore, although this disclosure describes and illustrates particular components, devices, or systems carrying out particular steps of the method of FIG. 4, this disclosure contemplates any suitable combination of any suitable components, devices, or systems carrying out any suitable steps of the method of FIG. 4

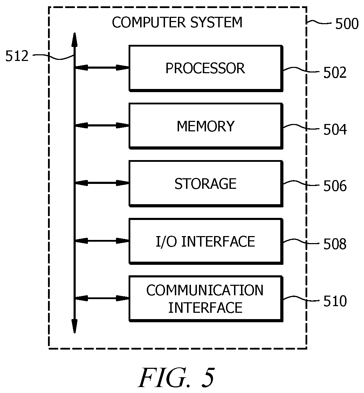

FIG. 5 illustrates an example computer system 500. In particular embodiments, one or more computer systems 500 perform one or more steps of one or more methods described or illustrated herein. In particular embodiments, one or more computer systems 500 provide functionality described or illustrated herein. In particular embodiments, software running on one or more computer systems 500 performs one or more steps of one or more methods described or illustrated herein or provides functionality described or illustrated herein. Particular embodiments include one or more portions of one or more computer systems 500. Herein, reference to a computer system may encompass a computing device, and vice versa, where appropriate. Moreover, reference to a computer system may encompass one or more computer systems, where appropriate. In one or more embodiments, the metadata analysis module 214 (referring to FIG. 2) may utilize or function as one or more computer systems 500.

This disclosure contemplates any suitable number of computer systems 500. This disclosure contemplates computer system 500 taking any suitable physical form. As example and not by way of limitation, computer system 500 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 500 may include one or more computer systems 500; be unitary or distributed; span multiple locations; span multiple machines; span multiple data centers; or reside in a cloud, which may include one or more cloud components in one or more networks. Where appropriate, one or more computer systems 500 may perform without substantial spatial or temporal limitation one or more steps of one or more methods described or illustrated herein. As an example, and not by way of limitation, one or more computer systems 500 may perform in real time or in batch mode one or more steps of one or more methods described or illustrated herein. One or more computer systems 500 may perform at different times or at different locations one or more steps of one or more methods described or illustrated herein, where appropriate.

In particular embodiments, computer system 500 includes a processor 502, a memory 504, a storage 506, an input/output (I/O) interface 508, a communication interface 510, and a bus 512. Although this disclosure describes and illustrates a particular computer system having a particular number of particular components in a particular arrangement, this disclosure contemplates any suitable computer system having any suitable number of any suitable components in any suitable arrangement.

In particular embodiments, processor 502 includes hardware for executing instructions, such as those making up a computer program. As an example and not by way of limitation, to execute instructions, processor 502 may retrieve (or fetch) the instructions from an internal register, an internal cache, memory 504, or storage 506; decode and execute them; and then write one or more results to an internal register, an internal cache, memory 504, or storage 506. In particular embodiments, processor 502 may include one or more internal caches for data, instructions, or addresses. This disclosure contemplates processor 502 including any suitable number of any suitable internal caches, where appropriate. As an example and not by way of limitation, processor 502 may include one or more instruction caches, one or more data caches, and one or more translation lookaside buffers (TLBs). Instructions in the instruction caches may be copies of instructions in memory 504 or storage 506, and the instruction caches may speed up retrieval of those instructions by processor 502. Data in the data caches may be copies of data in memory 504 or storage 506 for instructions executing at processor 502 to operate on; the results of previous instructions executed at processor 502 for access by subsequent instructions executing at processor 502 or for writing to memory 504 or storage 506; or other suitable data. The data caches may speed up read or write operations by processor 502. The TLBs may speed up virtual-address translation for processor 502. In particular embodiments, processor 502 may include one or more internal registers for data, instructions, or addresses. This disclosure contemplates processor 502 including any suitable number of any suitable internal registers, where appropriate. Where appropriate, processor 502 may include one or more arithmetic logic units (ALUs); be a multi-core processor; or include one or more processors 502. Although this disclosure describes and illustrates a particular processor, this disclosure contemplates any suitable processor.

In particular embodiments, memory 504 includes main memory for storing instructions for processor 502 to execute or data for processor 502 to operate on. As an example and not by way of limitation, computer system 500 may load instructions from storage 506 or another source (such as, for example, another computer system 500) to memory 504. Processor 502 may then load the instructions from memory 504 to an internal register or internal cache. To execute the instructions, processor 502 may retrieve the instructions from the internal register or internal cache and decode them. During or after execution of the instructions, processor 502 may write one or more results (which may be intermediate or final results) to the internal register or internal cache. Processor 502 may then write one or more of those results to memory 504. In particular embodiments, processor 502 executes only instructions in one or more internal registers or internal caches or in memory 504 (as opposed to storage 506 or elsewhere) and operates only on data in one or more internal registers or internal caches or in memory 504 (as opposed to storage 506 or elsewhere). One or more memory buses (which may each include an address bus and a data bus) may couple processor 502 to memory 504. Bus 512 may include one or more memory buses, as described below. In particular embodiments, one or more memory management units (MMUs) reside between processor 502 and memory 504 and facilitate accesses to memory 504 requested by processor 502. In particular embodiments, memory 504 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 504 may include one or more memories 504, where appropriate. Although this disclosure describes and illustrates particular memory, this disclosure contemplates any suitable memory.

In particular embodiments, storage 506 includes mass storage for data or instructions. As an example and not by way of limitation, storage 506 may include a hard disk drive (HDD), a floppy disk drive, flash memory, an optical disc, a magneto-optical disc, magnetic tape, or a Universal Serial Bus (USB) drive or a combination of two or more of these. Storage 506 may include removable or non-removable (or fixed) media, where appropriate. Storage 506 may be internal or external to computer system 500, where appropriate. In particular embodiments, storage 506 is non-volatile, solid-state memory. In particular embodiments, storage 506 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 506 taking any suitable physical form. Storage 506 may include one or more storage control units facilitating communication between processor 502 and storage 506, where appropriate. Where appropriate, storage 506 may include one or more storages 506. Although this disclosure describes and illustrates particular storage, this disclosure contemplates any suitable storage.

In particular embodiments, I/O interface 508 includes hardware, software, or both, providing one or more interfaces for communication between computer system 500 and one or more I/O devices. Computer system 500 may include one or more of these I/O devices, where appropriate. One or more of these I/O devices may enable communication between a person and computer system 500. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 508 for them. Where appropriate, I/O interface 508 may include one or more device or software drivers enabling processor 502 to drive one or more of these I/O devices. I/O interface 508 may include one or more I/O interfaces 508, where appropriate. Although this disclosure describes and illustrates a particular I/O interface, this disclosure contemplates any suitable I/O interface.

In particular embodiments, communication interface 510 includes hardware, software, or both providing one or more interfaces for communication (such as, for example, packet-based communication) between computer system 500 and one or more other computer system 500 or one or more networks. As an example and not by way of limitation, communication interface 510 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 510 for it. As an example and not by way of limitation, computer system 500 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 500 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 500 may include any suitable communication interface 510 for any of these networks, where appropriate. Communication interface 510 may include one or more communication interfaces 510, where appropriate. Although this disclosure describes and illustrates a particular communication interface, this disclosure contemplates any suitable communication interface.

In particular embodiments, bus 512 includes hardware, software, or both coupling components of computer system 500 to each other. As an example and not by way of limitation, bus 512 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 512 may include one or more buses 512, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

In summary, in one embodiment, a method for storing auditable metadata, by a system, includes receiving incoming signals communicated from at least one application service to a first pod associated with a user space of a node. The method further includes extracting metadata associated with data provided by the received incoming signals. The method further includes receiving outgoing signals communicated from the first pod to an external entity, wherein the incoming signals and the outgoing signals are received by a listener module. The method further includes comparing the incoming signals to the outgoing signals to detect a variation and determining that the data has been transmitted to the external entity based on a determination that there is no detected variation from the comparison between the incoming signals and the outgoing signals.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend within the scope of the claims. The scope of the claims is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend within the scope of the appended claims. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

The embodiments disclosed herein are only examples, and the scope of the claims is not limited to them. Particular embodiments may include all, some, or none of the components, elements, features, functions, operations, or steps of the embodiments disclosed herein. Embodiments disclosed herein include a method, an apparatus, a storage medium, a system and a computer program product, wherein any feature mentioned in one category, e.g., a method, can be applied in another category, e.g., a system, as well.

## Claims

1. Apparatus comprising:
means for receiving incoming signals communicated from at least one application service (224) to a first pod (210) associated with a user space (204) of a node (202);
means for extracting metadata associated with data provided by the received incoming signals;
means for receiving outgoing signals communicated from the first pod to an external entity (106), wherein the external entity is external to the node (202) and communicates with the node via a network interface controller (222) wherein the incoming signals and the outgoing signals are received by a listener module (212);
means for comparing the incoming signals to the outgoing signals to detect a variation;
means for determining that both the metadata and the data has been transmitted to the external entity based on a determination that there is no detected variation from the comparison between the incoming signals and the outgoing signals; and
means for flagging and/or filtering out the data, in response to a determination that both the metadata and the data have been transmitted to the external entity and a determination that the external entity was not authorized to receive the data.

2. The apparatus of claim 1, further comprising means for storing the extracted metadata in a local database (216) as an auditable record.

3. The apparatus of claim 1 or 2, further comprising means for configuring a sampling rate of the listener module (212).

4. The apparatus of any of claims 1 to 3, further comprising means for filtering the incoming signals and the outgoing signals based on a type of pod used as the first pod (210), a scanner of the first pod, a collector of the first pod, or a combination thereof.

5. The apparatus of any of claims 1 to 4, further comprising:
monitoring the identification of one or more instances of a searched query in one or more pods, the searched query being anonymized post-classification by the external entity; and
monitoring the communication of instructions to delete the identified one or more instances of the searched query.

6. The apparatus of any of claims 1 to 5, the operations further comprising:
inhibiting traffic flow to and from the first pod (210) in response to a determination that the data has been transmitted to the external entity and a determination that the external entity was not authorized to receive the data.

7. A method for storing auditable metadata, comprising:
receiving incoming signals communicated from at least one application service (224) to a first pod (210) associated with a user space (204) of a node (202) wherein the external entity is external to the node (202) and communicates with the node via a network interface controller (222);
extracting metadata associated with data provided by the received incoming signals;
receiving outgoing signals communicated from the first pod (210) to an external entity, wherein the incoming signals and the outgoing signals are received by a listener module (212);
comparing the incoming signals to the outgoing signals to detect a variation;
determining that both the metadata and the data has been transmitted to the external entity based on a determination that there is no detected variation from the comparison between the incoming signals and the outgoing signals; and
flagging and/or filtering out the data, in response to a determination that both the metadata and the data have been transmitted to the external entity and a determination that the external entity was not authorized to receive the data.

8. The method of claim 7, further comprising storing the extracted metadata in a local database (216) as an auditable record.

9. The method of claim 7 or 8, further comprising configuring a sampling rate of the listener module (212).

10. The method of any of claims 7 to 9, further comprising filtering the incoming signals and the outgoing signals based on a type of pod used as the first pod (210), a scanner of the first pod, a collector of the first pod, or a combination thereof.

11. The method of any of claims 7 to 10, further comprising:
monitoring the identification one or more instances of a searched query in one or more pods, the searched query being anonymized post-classification by the external entity; and
monitoring the communication instructions to delete the identified one or more instances of the searched query.

12. The method of any of claims 7 to 11, further comprising inhibiting traffic flow to and from the first pod (210) in response to a determination that the data has been transmitted to the external entity and a determination that the external entity was not authorized to receive the data.

13. A computer program, computer program product or computer readable medium comprising instructions which, when executed by a computer, cause the computer to carry out the steps of the method of any of claims 7 to 12.

## Patentansprüche

1. Einrichtung, die Folgendes umfasst:
ein Mittel zum Empfangen eingehender Signale, die von mindestens einem Anwendungsdienst (224) an einen ersten Pod (210) übermittelt werden, der einem Benutzerraum (204) eines Knotens (202) zugeordnet ist;
ein Mittel zum Extrahieren von Metadaten, die Daten zugeordnet sind, die von den empfangenen eingehenden Signalen bereitgestellt werden;
ein Mittel zum Empfangen ausgehender Signale, die von dem ersten Pod an eine externe Entität (106) kommuniziert werden, wobei die externe Entität sich außerhalb des Knotens (202) befindet und mit dem Knoten über eine Netzwerkschnittstellensteuerung (222) kommuniziert wobei die eingehenden Signale und die ausgehenden Signale von einem Abhörmodul (212) empfangen werden;
ein Mittel zum Vergleichen der eingehenden Signale mit den ausgehenden Signalen, um eine Veränderung zu erfassen;
ein Mittel zum Bestimmen, dass sowohl die Metadaten als auch die Daten an die externe Entität übertragen worden sind basierend auf einer Bestimmung, dass es keine erfasste Abweichung aus dem Vergleich zwischen den eingehenden Signalen und den ausgehenden Signalen gibt; und
ein Mittel zum Markieren und/oder Herausfiltern der Daten, als Reaktion auf eine Bestimmung, dass sowohl die Metadaten als auch die Daten an die externe Entität übertragen wurden, und eine Bestimmung, dass die externe Entität nicht autorisiert war, die Daten zu empfangen.

2. Einrichtung nach Anspruch 1, die ferner ein Mittel zum Speichern der extrahierten Metadaten in einer lokalen Datenbank (216) als einen prüfbaren Datensatz umfasst.

3. Einrichtung nach Anspruch 1 oder 2, die ferner ein Mittel zum Konfigurieren einer Abtastrate des Abhörmoduls (212) umfasst.

4. Einrichtung nach einem der Ansprüche 1 bis 3, die ferner ein Mittel zum Filtern der eingehenden Signale und der ausgehenden Signale basierend auf einem Typ von Pod, der als erster Pod (210) verwendet wird, einem Scanner des ersten Pods, einem Kollektor des ersten Pods oder einer Kombination davon umfasst.

5. Einrichtung nach einem der Ansprüche 1 bis 4, die ferner Folgendes umfasst:
Überwachen der Identifikation einer oder mehrerer Instanzen einer gesuchten Abfrage in einem oder mehreren Pods, wobei die gesuchte Abfrage nach der Klassifizierung durch die externe Entität anonymisiert wird; und
Überwachen der Kommunikation von Anweisungen zum Löschen der identifizierten einen oder mehreren Instanzen der gesuchten Abfrage.

6. Einrichtung nach einem der Ansprüche 1 bis 5, wobei die Vorgänge ferner umfassen:
Sperren des Datenverkehrsflusses zu und von dem ersten Pod (210) als Reaktion auf eine Bestimmung, dass die Daten an die externe Entität übertragen wurden, und eine Bestimmung, dass die externe Entität nicht autorisiert war, die Daten zu empfangen.

7. Verfahren zum Speichern von prüfbaren Metadaten, das Folgendes umfasst:
Empfangen eingehender Signale, die von mindestens einem Anwendungsdienst (224) an einen ersten Pod (210) übermittelt werden, der einem Benutzerraum (204) eines Knotens (202) zugeordnet ist; wobei die externe Entität sich außerhalb des Knotens (202) befindet und mit dem Knoten über eine Netzwerkschnittstellensteuerung (222) kommuniziert;
Extrahieren von Metadaten, die Daten zugeordnet sind, die von den empfangenen eingehenden Signalen bereitgestellt werden;
Empfangen ausgehender Signale, die von dem ersten Pod (210) an eine externe Entität kommuniziert werden, wobei die eingehenden Signale und die ausgehenden Signale von einem Abhörmodul (212) empfangen werden;
Vergleichen der eingehenden Signale mit den ausgehenden Signalen, um eine Veränderung zu erfassen;
Bestimmen, dass sowohl die Metadaten als auch die Daten an die externe Entität übertragen worden sind basierend auf einer Bestimmung, dass es keine erfasste Abweichung aus dem Vergleich zwischen den eingehenden Signalen und den ausgehenden Signalen gibt; und
Markieren und/oder Herausfiltern der Daten, als Reaktion auf eine Bestimmung, dass sowohl die Metadaten als auch die Daten an die externe Entität übertragen wurden, und eine Bestimmung, dass die externe Entität nicht autorisiert war, die Daten zu empfangen.

8. Verfahren nach Anspruch 7, das ferner das Speichern der extrahierten Metadaten in einer lokalen Datenbank (216) als einen prüfbaren Datensatz umfasst.

9. Verfahren nach Anspruch 7 oder 8, das ferner das Konfigurieren einer Abtastrate des Abhörmoduls (212) umfasst.

10. Verfahren nach einem der Ansprüche 7 bis 9, die ferner das Filtern der eingehenden Signale und der ausgehenden Signale basierend auf einem Typ von Pod, der als erster Pod (210) verwendet wird, einem Scanner des ersten Pods, einem Kollektor des ersten Pods oder einer Kombination davon umfasst.

11. Verfahren nach einem der Ansprüche 7 bis 10, das ferner Folgendes umfasst:
Überwachen der Identifikation einer oder mehrerer Instanzen einer gesuchten Abfrage in einem oder mehreren Pods, wobei die gesuchte Abfrage nach der Klassifizierung durch die externe Entität anonymisiert wird; und
Überwachen der Kommunikation von Anweisungen zum Löschen der identifizierten einen oder mehreren Instanzen der gesuchten Abfrage.

12. Verfahren nach einem der Ansprüche 7 bis 11, das ferner das Sperren des Datenverkehrsflusses zu und von dem ersten Pod (210) umfasst, als Reaktion auf eine Bestimmung, dass die Daten an die externe Entität übertragen wurden, und eine Bestimmung, dass die externe Entität nicht autorisiert war, die Daten zu empfangen.

13. Computerprogramm, Computerprogrammprodukt oder computerlesbares Medium, das Anweisungen umfasst, die, wenn sie von einem Computer ausgeführt werden, den Computer veranlassen, die Schritte des Verfahrens nach einem der Ansprüche 7 bis 12 auszuführen.

## Revendications

1. Appareil comprenant :
un moyen de réception de signaux entrants communiqués par au moins un service d'application (224) à un premier pod (210) associé à un espace utilisateur (204) d'un nœud (202) ;
un moyen d'extraction de métadonnées associées à des données fournies par les signaux entrants reçus ;
un moyen de réception des signaux sortants communiqués par le premier pod à une entité externe (106), dans lequel l'entité externe est externe au nœud (202) et communique avec le nœud via un contrôleur d'interface réseau (222) dans lequel les signaux entrants et les signaux sortants sont reçus par un module d'écoute (212) ;
un moyen de comparaison des signaux entrants aux signaux sortants afin de détecter une variation ;
un moyen de détermination qu'à la fois les métadonnées et les données ont été transmises à l'entité externe sur la base d'une détermination qu'aucune variation n'est détectée suite à la comparaison entre les signaux entrants et les signaux sortants ; et
un moyen de signalisation et/ou filtrage des données, en réponse à une détermination qu'à la fois les métadonnées et les données ont été transmises à l'entité externe et à une détermination que l'entité externe n'était pas autorisée à recevoir les données.

2. Appareil selon la revendication 1, comprenant en outre un moyen de stockage des métadonnées extraites dans une base de données locale (216) en tant qu'enregistrement vérifiable.

3. Appareil selon la revendication 1 ou 2, comprenant en outre un moyen de configuration d'une fréquence d'échantillonnage du module d'écoute (212).

4. Appareil selon l'une quelconque des revendications 1 à 3, comprenant en outre un moyen de filtrage des signaux entrants et sortants en fonction d'un type de pod utilisé comme premier pod (210), d'un scanner du premier pod, d'un collecteur du premier pod, ou d'une combinaison de ceux-ci.

5. Appareil selon l'une quelconque des revendications 1 à 4, comprenant en outre :
la surveillance de l'identification d'une ou plusieurs instances d'une requête recherchée dans un ou plusieurs espaces, la requête recherchée étant anonymisée après classification par l'entité externe ; et
la surveillance de la communication d'instructions pour supprimer les une ou plusieurs instances identifiées de la requête recherchée.

6. Appareil selon l'une quelconque des revendications 1 à 5, les opérations comprenant en outre :
l'inhibition du flux de trafic à destination et en provenance du premier pod (210) en réponse à une détermination que les données ont été transmises à l'entité externe et une détermination que l'entité externe n'était pas autorisée à recevoir les données.

7. Procédé de stockage de métadonnées vérifiables, comprenant :
la réception de signaux entrants communiqués par au moins un service d'application (224) à un premier pod (210) associé à un espace utilisateur (204) d'un nœud (202) dans lequel l'entité externe est externe au nœud (202) et communique avec le nœud via un contrôleur d'interface réseau (222) ;
l'extraction de métadonnées associées à des données fournies par les signaux entrants reçus ;
la réception de signaux sortants communiqués par le premier pod (210) à une entité externe, dans lequel les signaux entrants et les signaux sortants sont reçus par un module d'écoute (212) ;
la comparaison des signaux entrants aux signaux sortants pour détecter une variation ;
la détermination qu'à la fois les métadonnées et les données ont été transmises à l'entité sur la base d'une détermination qu'aucune variation n'est détectée suite à la comparaison entre les signaux entrants et les signaux sortants ; et
la signalisation et/ou le filtrage des données, en réponse à une détermination qu'à la fois les métadonnées et les données ont été transmises à l'entité externe et une détermination que l'entité externe n'était pas autorisée à recevoir les données.

8. Procédé selon la revendication 7, comprenant en outre le stockage des métadonnées extraites dans une base de données locale (216) en tant qu'enregistrement vérifiable.

9. Procédé selon la revendication 7 ou 8, comprenant en outre la configuration d'une fréquence d'échantillonnage du module d'écoute (212).

10. Procédé selon l'une quelconque des revendications 7 à 9, comprenant en outre le filtrage des signaux entrants et sortants en fonction d'un type de pod utilisé comme premier pod (210), d'un scanner du premier pod, d'un collecteur du premier pod, ou d'une combinaison de ceux-ci.

11. Procédé selon l'une quelconque des revendications 7 à 10, comprenant en outre :
la surveillance de l'identification d'une ou plusieurs instances d'une requête recherchée dans un ou plusieurs pods, la requête recherchée étant anonymisée après classification par l'entité externe ; et
la surveillance d'instructions de communication pour supprimer les une ou plusieurs instances identifiées de la requête recherchée.

12. Procédé selon l'une quelconque des revendications 7 à 11, comprenant en outre l'inhibition du flux de trafic à destination et en provenance du premier pod (210) en réponse à une détermination que les données ont été transmises à l'entité externe et une détermination que l'entité externe n'était pas autorisée à recevoir les données.

13. Programme d'ordinateur, produit de programme d'ordinateur ou support lisible par ordinateur comprenant des instructions qui, à leur exécution par un ordinateur, amènent l'ordinateur à entreprendre les étapes du procédé selon l'une quelconque des revendications 7 à 12.
